# EUROPEAN PATENT APPLICATION

(11) **EP 4 570 557 A1**
(43) Date of publication of application: **18.06.2025**
(21) Application number: 24219022.1
(22) Date of filing: 11.12.2024
(51) Int. Cl.: B60K 35/215, B62D 1/00, B60K 35/22, B60K 35/50, B60K 35/53, B60K 35/60, B62D 1/16

(54) **STEERING COLUMN ASSEMBLY PROVIDED WITH AN INSTRUMENT CLUSTER**

(30) Priority: 13.12.2023 IT 202300026592
(71) Applicant: FERRARI S.p.A., 41100 Modena (IT)
(72) Inventor: MULTARI, Daniele, 41100 MODENA (IT); CALAMITA, Alessandro, 41100 MODENA (IT)
(74) Representative: Studio Torta S.p.A.

(57) **Abstract**

A steering column assembly (1) has a support structure (2) suitable for attachment to a vehicle frame, a steering column (4), and a sleeve (10), which coaxially houses the column (4) and is coupled to the support structure (2) so as to swing upwards and downwards; the sleeve (10) supports an instrument cluster (18) via a bracket (20), which is fixed to the sleeve (10) by a coupling that includes a clamp system (21).

## Description

### CROSS-REFERENCE TO RELATED APPLICATIONS

This patent application claims priority from Italian patent application no. 102023000026592 filed on December 13, 2023, the entire disclosure of which is incorporated herein by reference.

### TECHNICAL FIELD

The present invention relates to a steering column assembly provided with an instrument cluster.

### PRIOR ART

As known, the driving position in vehicles can be configured as a function of the height and build of the driver.

In general, the driving position is provided with an instrument cluster for the monitoring, control and/or adjustment of the various devices of the vehicle. In general, the instrument cluster is arranged in a fixed position on a dashboard, in turn arranged underneath the windscreen of the motor vehicle. At the same time, the driving position is provided with a steering wheel, the position of which can be adjusted manually with respect to the dashboard and, after such manual adjustment, is locked by a retention mechanism in order to remain fixed while driving. The position adjustment generally consists of making the steering column swing upwards and downwards, about a horizontal axis that is orthogonal to the travel direction and to the rotation axis of the steering wheel, and of sliding the steering wheel forwards and backwards along said rotation axis.

If the instrument cluster is arranged behind the steering wheel (considered from the viewpoint of the driver), it is not always possible to achieve an optimal visibility of the information displayed on the instrument cluster itself. In particular, adjustment of the position of the steering wheel can compromise the visibility of a part of the instrument cluster, while the latter has a position that cannot be personalised on the basis of the physical characteristics of the driver. Consequently, due to the fixed position of the instrument cluster, it is not always possible to reach an optimal configuration of the driving position: some drivers (for example, those who are very tall or very short in height) are able to achieve only a satisfying compromise, in terms of ergonomics and visibility of the information.

In order to overcome these drawbacks, at least partially, solutions are known in which the instrument cluster is fixed to a rear part of the steering column, so that it swings together with the latter column upwards and downwards during adjustment of the steering wheel. In this manner, in practice, the instrument cluster always remains aligned with the steering wheel, so it is relatively simple to find a configuration that, simultaneously, is both ergonomic and allows a good visibility of the information.

In particular, the known solutions include a bracket that, on one side, is fixed to the steering column by welding and, on the other side, supports the instrument cluster in a fixed position. However, the fixing method by welding becomes relatively complex to implement and/or requires costly alterations when the steering column is made of an aluminium alloy.

There is, therefore, a need to find an alternative solution that allows fixing of the instrument cluster to the steering column independently of their materials, without the need to alter the structure of the steering columns of known type, and in a manner so as to obtain a sufficient rigidity to avoid undesired vibrations of the instrument cluster during use of the motor vehicle. Furthermore, preferably, there is a need to adopt a solution that is relatively compact, so as not to interfere with the manually releasable retention mechanism, provided to lock the position of the steering wheel after its adjustment.

### SUMMARY OF THE INVENTION

The object of the present invention is to provide a steering column assembly provided with an instrument cluster, which allows the needs described above to be satisfied in a simple and cheap manner.

According to the present invention, a steering column assembly as defined in claim 1 is provided.

The dependent claims define particular embodiments of the invention.

### BRIEF DESCRIPTION OF THE DRAWINGS

The present invention will now be described with reference to the appended drawings, which illustrate a non-limiting embodiment thereof, wherein:
- Figure 1 shows, in perspective and with schematised parts, a preferred embodiment of the steering column assembly according to the present invention;
- Figure 2 is a different perspective that shows, on an enlarged scale, a detail of Figure 1; and
- Figure 3 is a front view of the detail of Figure 2; and
- Figure 4 is a cross-section according to the vertical cross-section plane identified by line IV-IV in Figure 3.

### DETAILED DESCRIPTION OF PREFERRED EMBODIMENTS OF THE INVENTION

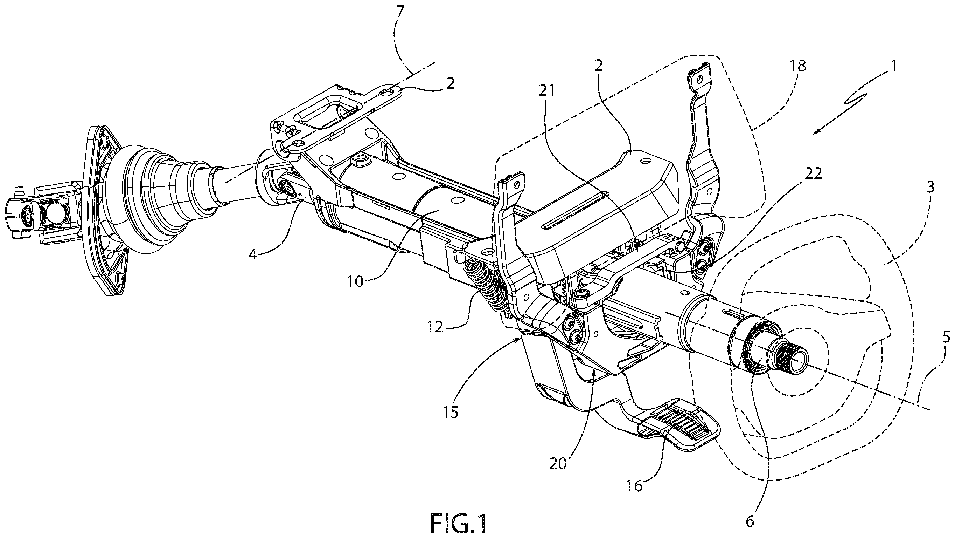

In Figure 1, the number 1 indicates a steering column assembly installed on a motor vehicle (not shown) in front of a driving position for a driver.

Incidentally, it is noted that, in the following description, the terms "in front of", "behind", "frontally", "facing", "to the rear of", "front", "rear", etc., are used with reference to the viewpoint of a driver in the driving position (and not considering the normal longitudinal direction of travel of the vehicle).

The assembly 1 comprises a support structure 2, designed to be fixed to a vehicle frame, not shown, a steering wheel 3 suitable to be manoeuvred by the driver to steer the vehicle, and a steering column 4, which has an axis 5, has an axial end 6 fixed to the steering wheel 3 and is able to rotate together with the steering wheel 3 about the axis 5, under the manual control of the driver, in order to operate a wheel steering mechanism, not shown.

Furthermore, the assembly 1 comprises a sleeve 10 that is coaxial to the steering column 4, houses an intermediate portion of the steering column 4, and is coupled to the structure 2 in a known manner, that is not described in detail, so as to be angularly fixed about the axis 5 and so as to be able to swing about a horizontal axis 7 orthogonal to the axis 5. In this manner, it is possible to vary the inclination of the axis 5 about the axis 7, in order to raise and to lower the steering wheel 3 as a function of the ergonomics of the driver in the driving position, during an adjustment phase before driving the vehicle. In particular, at least one spring 12 is provided to exert an elastic force that tends to bring the sleeve 10 upwards.

Preferably, the steering column 4 has a telescopic type structure, inside the sleeve 10, so as to be extendible and therefore be able to longitudinally move the steering wheel 3 towards and away from the driver, again for reasons of ergonomics.

In particular, the assembly 1 comprises a releasable locking device 15, of the known type, and not described in detail, acting on the sleeve 10 and having a lever 16 that can be manually operated between two positions, respectively to lock and to unlock the capability of adjusting the position of the steering wheel 3.

The assembly 1 further comprises an instrument cluster 18 (schematically shown) having a screen (i.e. a monitor or display) on a front surface, in order to display indicators that depict the operating state of a plurality of devices arranged on board the vehicle. Possibly, the instrument cluster 18 may also comprise control elements (such as buttons) that can be manually operated to control at least some of such devices. Possibly, the screen of the instrument cluster 18 may be of the touch activation type, i.e. a "touchscreen", so as to integrate visual indicators and control elements.

The instrument cluster 18 is supported by a bracket 20 that is fixed to the sleeve 10, preferably at a front end 22 of the sleeve 10.

According to the present invention, the bracket 20 is fixed to the front end 22 of the sleeve 10 without welding, but via a coupling comprising a clamp system 21.

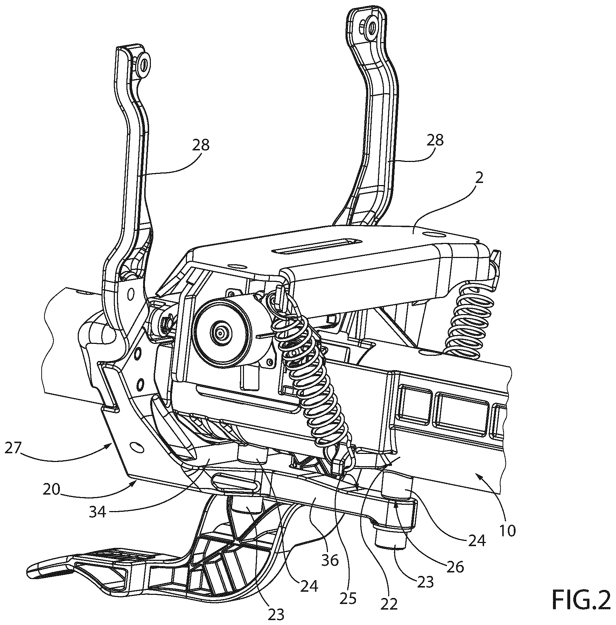

With reference to Figure 2, preferably, the coupling of the bracket 20 further comprises at least one screw 23, screwed onto a corresponding portion 24 of the sleeve 10 and arranged, in particular, in a position diametrically opposite to the one where the clamp system 21 is located. More in particular, the coupling comprises two screws 23, arranged in aligned positions with each other in a direction parallel to the axis 5. Advantageously, the screw, or the screws, 23 is/are arranged underneath the sleeve 10, whereas the clamp system 21 is arranged above.

It is clear that the bracket 20 has a surface 25 that is arranged in contact, in a radial direction, against a corresponding surface 26 of the sleeve 10, defined by the portions 24. In the specific shown example, the portions 24 in which the screws 23 are screwed are defined by respective appendages, which project radially with respect to the front end 22 of the sleeve 10.

Thanks to the screws 23, the support element 27 stably maintains the position set by design with respect to the sleeve 10 (the clamp system 21 alone might not, in fact, be sufficient to prevent axial sliding or sliding in a circumferential direction with respect to the axis 5).

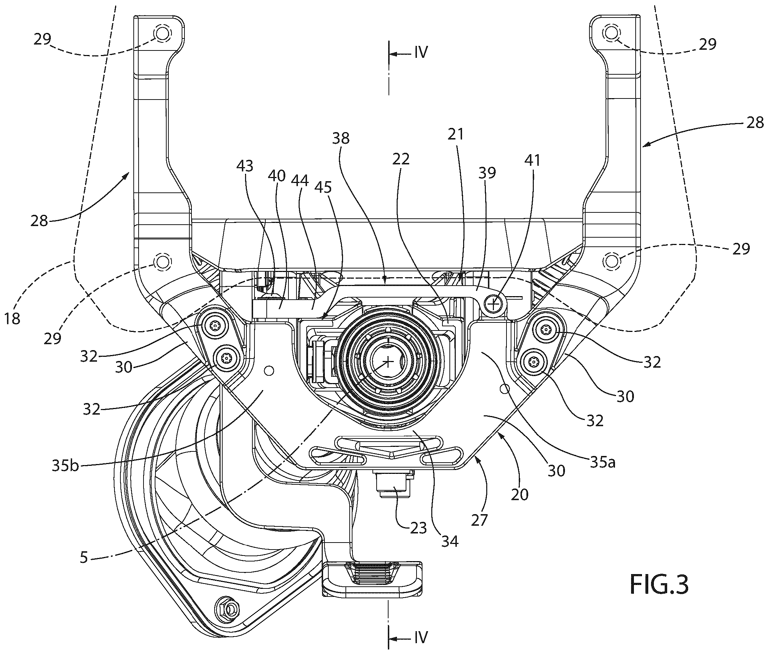

With reference to the front view of Figure 3, preferably, the bracket 20 comprises a support element 27 and two arms 28, which project upwards from the support element 27, are pieces separate from the element 27, and support the instrument cluster 18, for example by means of screws 29, schematically shown. The lower ends of the arms 28 are indicated by reference number 30 and are fixed to respective lateral eyelets of the support element 27, for example by screws 32. The screws 32 and/or the screws 29 engage respective holes, the diameter of which preferably guarantees a radial clearance with respect to such screws, in order to provide a certain degree of freedom in positioning the instrument cluster 18 with respect to the steering column 4 and with respect to other components in the passenger compartment during the assembly phases, and, therefore, in order to compensate for any alignment tolerances with respect to such components.

According to a not shown variant, the arms 28 and the support element 27 define portions of a single piece (in other words, the fixing by screws 32 is absent).

The set of the support element 27 and the arms 28 forms a kind of fork that, during assembly, is fitted around the steering column 4 with a radial movement directed towards the axis 5. The support element 27 comprises a cradle 30, that is arranged around a part of the outer perimeter of the sleeve 22 (the lower part, in detail). The cradle 30 comprises a central portion 34 and two wings 35a and 35b, which project from the central portion 34 in positions which are diametrically opposite to each other with respect to the axis 5.

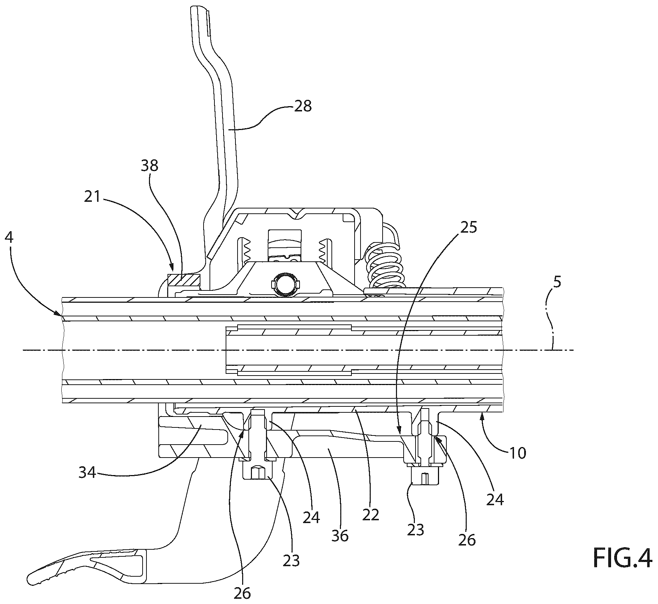

Preferably, as shown in Figure 4, the support element 27 further comprises an appendage 36 that projects from the central portion 34 of the cradle 30 in a parallel direction to the axis 5, backwards (i.e. in the opposite direction to the steering wheel 3). At least one of the two screws 23 is arranged at the appendage 36.

Preferably, the clamp system 21 is arranged axially in a position moved forwards (i.e. towards the steering wheel 3) with respect to contact zones between the surfaces 25 and 26 and/or with respect to the screws 23. In other words, the clamp system 21 is distanced axially with respect to such contact zones. In particular, the clamp system 21 is arranged axially at the cradle 30, and the latter is distanced radially from the front end 22 of the sleeve 10. In other words, the cradle 30 is arranged cantilevered with respect to the contact zones between the surfaces 25 and 26, and the clamp system 21 exerts a radial forcing action that tends to bring the cradle 30 radially towards the front end 22 of the sleeve 10, thanks to a certain flexibility of the material of the support element 27.

With reference to Figure 3, the clamp system 21 comprises a lever 38 having two ends 39 and 40, opposite to each other: the end 39 is hinged to the wing 35a about an axis 41 substantially parallel to the axis 5, so as to allow the lever 38 to rotate away from and towards a fastening condition, shown in the appended figures. The clamp system 21 further comprises a screw or an equivalent fastening element 43, which is carried by the end 40 and is coupled to the wing 35b (i.e. on the opposite side with respect to the hinge defined by the axis 41) to lock the lever 38 in the fastening condition and to cause the radial forcing action that has been mentioned above. Lastly, the lever 38 comprises an intermediate portion 44 that is arranged in abutment against a shoulder 45 of the sleeve 10. In particular, the sleeve 10 remains fastened sandwiched between the intermediate portion 44 of the lever 38 and the surface 25 of the support element 27.

Advantageously, the end 40 of the lever 38 is distanced from the wing 35b along the axis of the fastening element 43 in order to guarantee a certain clearance that allows adjustment of the forcing of the intermediate portion 44 of the lever 38 against the shoulder 45 (and therefore adjustment of the radial force of the clamp system 21 on the sleeve 10).

It is clear from the above that the clamp system 21, when fastened, exerts a radial force on the sleeve 10 and, furthermore, provides an additional constraint with respect to the screws 23, so as to guarantee stability and rigidity in coupling of the bracket 20, in order to eliminate vibrations of the instrument cluster 18 during use.

At the same time, the instrument cluster 18 moves upwards and downwards, about the horizontal axis 7, in unison with the steering wheel 3, thanks to the fixed coupling to the sleeve 10 via the bracket 20. Therefore, the instrument cluster 18 always remains aligned with the steering wheel 3, for better ergonomics of the driving position and a greater visibility of the information shown on said instrument cluster 18.

In other words, thanks to the clamp system 21, it is possible to disengage the instrument cluster 18 from the dashboard of the vehicle and to obtain a coupling to the sleeve 10 without welds, but nonetheless stable and rigid.

The proposed solution is also relatively compact, and requires relatively limited alterations to the sleeve 10 in order to be able to connect the bracket 20 (essentially, it is only necessary to manufacture the portions 26 where the screws 23 will be tightened).

Other advantages are also clear to a person skilled in the art, based on the other characteristics described above.

In conclusion, it is clear from the above that changes and variants may be made to the assembly 1 described with reference to the appended figures without deviating from the scope of protection of the present invention, as defined by the appended claims.

In particular, the bracket 20 could be shaped differently to what is described by way of example, but always provided with a clamp system capable to exert a forcing action on the outer surface of the sleeve 10 in a radial or substantially radial direction.

For example, the lever 38 could come into contact against two shoulders provided on opposite sides of the sleeve 10 (with respect to a vertical centreline on which the axis 5 lies), rather than coming into contact against the shoulder 45.

## Claims

1. A steering column assembly (1) comprising:
- a support structure (2) suitable for attachment to a vehicle frame;
- a sleeve (10) extending along a first axis (5) and coupled to said support structure (2) so as to be able to swing about a second axis (7), extending horizontally and orthogonally with respect to said first axis (5);
- a steering column (4) extending coaxially within said sleeve (10) and turnable about said first axis (5);
- an instrument cluster (18);
- a bracket (20) carrying said instrument cluster (18);
- fixing means (24,29) securing said bracket (20) to said sleeve (10) ;
**characterised in that** said fixing means (24,29) comprise a clamp system (21).

2. The steering column assembly according to claim 1, wherein said fixing means (24,29) comprise at least one screw (23) .

3. The steering column assembly according to claim 2, wherein said fixing means (24,29) comprise two screws (23) axially spaced apart along said sleeve (10).

4. The steering column assembly according to any one of the preceding claims, wherein said bracket (20) has a first surface (25) arranged in contact with a second surface (26), forming part of said sleeve (10); and wherein said clamp system (21) is diametrically opposite in relation to a contact area between said first and second surfaces (25,26).

5. The steering column assembly according to claim 4, wherein said clamp system (21) is arranged in an axial position that is different from said contact area along said sleeve (10).

6. The steering column assembly according to any one of the preceding claims, wherein said clamp system (21) comprises a lever (38) hinged to said bracket (20).

7. The steering column assembly according to claim 6, wherein said bracket (20) comprises a cradle (30), in turn comprising a first and a second wing (35a,35b), diametrically opposed to each other, and a central portion (34) arranged between said first and second wings (35a,35b); and wherein said lever (38) comprises a first end (39) hinged to said first wing (35a), an intermediate portion (44) arranged against a shoulder (45) of said sleeve (10), and a second end (40), which is opposite to said first end (39) and is fixed to said second wing (35b) by a fastening element (43).

8. The steering column assembly according to claim 7, wherein said cradle (30) is radially spaced apart from said sleeve (10).

9. The steering column assembly according to claim 7 or 8, wherein said second end (40) is spaced apart from said second wing (35b) along an axis of said fastening member (43).

10. The steering column assembly according to claim 9, wherein said fastening element (43) is a screw.
